# EUROPEAN PATENT SPECIFICATION

(11) **EP 2 187 316 B1**
(45) Date of publication and mention of the grant of the patent: **18.01.2012**
(21) Application number: 09275018.1
(22) Date of filing: 31.03.2009
(51) Int. Cl.: G06F 13/16, G06F 9/38

(54) **Gated storage system and synchronization controller and method for multiple multi-threaded processors**
Speichersystem mit Gate und Synchronisationssteuergerät und Verfahren für mehrfache Multi-Thread-Prozessoren
Système de stockage commandé par porte et contrôleur de synchronisation et procédé pour processeurs multiprocessus

(30) Priority: 17.11.2008 US 272290
(43) Date of publication of application: 19.05.2010
(73) Proprietor: Mobileye Technologies Ltd, Nicosia (IL)
(72) Inventor: Navon, Mois, 90435 Efrat (IL)
(74) Representative: Jehan, Robert

(56) References cited:
- EP-A- 1 132 818
- US-A1- 2005 251 639

## Description

### BACKGROUND

### 1. Technical Field

The present invention relates to multi-processing using multiple processors, in which each processor is capable of supporting multiple threads. Specifically, the present invention relates to a system and method for inter-thread communications between the threads of the various processors in the system, and to a gated storage system and to a method of synchronization of data.

### 2. Description of Related Art

Multiprocessing systems continue to become increasingly important in computing systems for many applications, including general purpose processing systems and embedded control systems. In the design of such multiprocessing systems, an important architectural consideration is scalability, In other words, as more hardware resources are added to a particular implementation the machine should produce higher performance. Not only do embedded implementations require increased processing power, many also require the seemingly contradictory attribute of providing low power consumption, in the context of these requirements, particularly for the embedded market, solutions are implemented as "Systems on Chip" or "SoC." MIPS Technologies, Inc., ARM, PowerPC (by IBM) and various other manufacturers, offer such SoC multiprocessing systems, In multiprocessing systems, loss in scaling efficiency may be attributed to many different issues, including long memory latencies and waits due to synchronization of thread processes.

Synchronization of processes using software and hardware protocols is a well-known problem, producing a wide range of solutions appropriate in different circumstances. Fundamentally, synchronization addresses potential issues that may occur when concurrent processes have access to shared data. As an aid in understanding, the following definitions are provided.

The term "multiprocessing" as used herein refers to the ability to support, more than one processor and/or the ability to allocate tasks between the multiple processors. A single central processing unit (CPU) on a chip is generally termed a "core"' and multiple central processing, units which are packaged on the same die are known as multiple "cores" or "muiti-core" The term "symmetric multiprocessing" (SMP), as used herein refers to a multiprocessor computer architecture where two or more identical processors are connected to a single shared main memory. Common multiprocessor systems today use an SMP architecture. In the case of multi-core processors, the SMP architecture as applied to the cores, treats the cores as separate processors.

The term "thread" as used herein is a sequential instruction stream. Many conventional processors run a single thread at a time. A "multithreaded processor" runs multiple threads at a time. A "hardware thread" or "thread context" as used herein, is the processor hardware state necessary to instantiate a thread of execution of an application instruction stream. The thread context incudes general purpose registers (GPRs) and program counter,

A "virtual processing element" (VPE) is a CPU which includes the processor state and logic necessary to instantiate a task. The VPE is an instantiation of a full architecture and elements, including privileged resources, sufficient to run a per-processor operating system image, In a MIPS processor, the set of shared CPO registers and the thread contexts affiliated with them make up a VPE. (Virtual Processing Element).

A virtual multiprocessor is a collection of interconnected VPEs. The virtual processor is "virtual" in the sense that a multiprocessor system usually refers to a system with several independent processors, whereas here a single core instantiates several VPEs. The VPEs in such a system may, or may not, implement multithreads.

The term "gating memory", "gating stornge", "gated memory", and "gated storage" are used herein interchangeably and refer to data storage elements (e.g. memory, registers) which are not directly accessible except, through logic circuitry which manages the access from multiple agents.

US-A-2005/0251639 discloses a synchronization between threads of different processors of the same manufacturer - in this case MIPS. The synchronization of threads requires another layer of intercommunications of their respective processor. This intercommunication is needed, among other things, primarily to arbitrate access to the shared resource the gated memory).

Improvements to synchronization among threads in a multithreaded multiprocessing environment is desirable, particularly when individual threads may be active on more than one multiple processors; additionally the prior art does not allow for multiple processors from different manufacturers to be synchronized together,

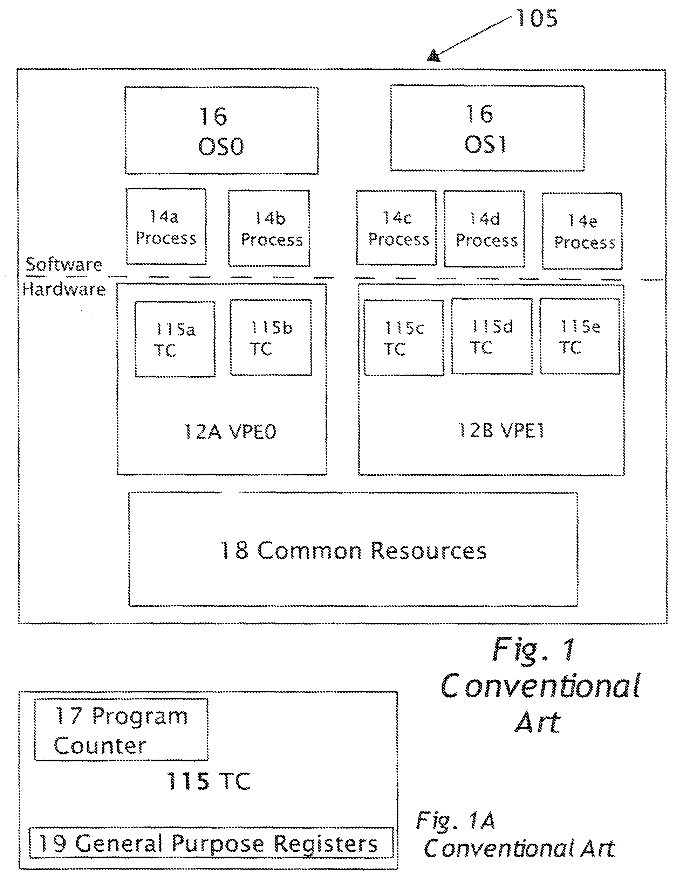

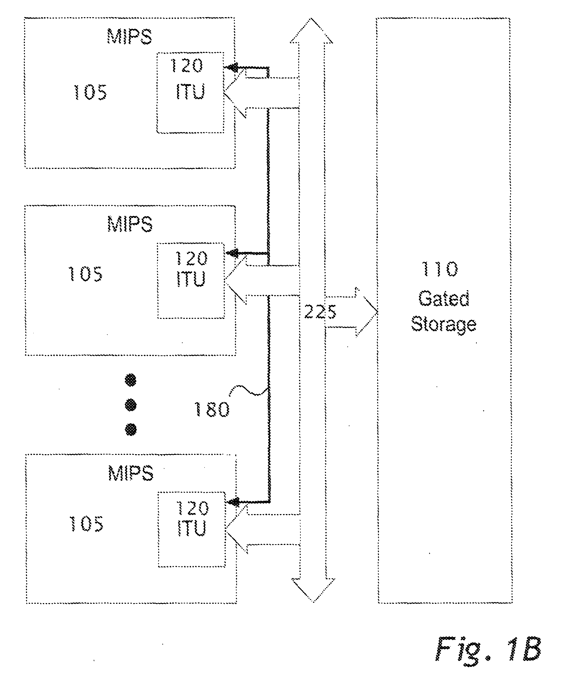

By way of example, reference is now made to Figures 1 and 1A which schematically illustrate a conventional multithreaded processor **105** of MIPS architecture. In processor **105** that is compatible with the industry-standard MIPS32K and/or MIPS64K instruction Set Architectures (a "MIPS Processor"), a thread context **115** includes a state of a set of general purpose registers **19,** Hi/Lo multiplier result registers, a representation of a program, counter **17,** and an associated privileged system control state, in the MIPS architecture, thread context **115** shares resources **18** with other thread contexts **115** including the CPO registers used by privileged code in an Operating System (OS) kernel **16.** Thread contexts **115** provide the hardware states to run processes **14a -14e** in one-to-one correspondance with thread contexts **115a-115e.** A MIPS processor is composed of a least one independent proccessing element referred to as a Virtual Processing Element ("VPE") **12.** A VPE includes at least one thread context **115.** Processor **105** contains number of VPEs **12,** each of which operates as an independent processing element through the sharing of resources 18 in processor **M5** and supporting an instruction set architecture. The set of shared CP0 registers and affiliated thread contexts **115** make up VPE **12. To** software, a single core MIPS processor **105** with two VPEs **12** looks like a symmetric multiprocessor ("SMP") with two cores. This allows existing multiple SMP-capable operating systems **16** (OS0, OS1) to manage the set of VPEs **12,** which transparently share resources **18.** In processor **105,** two VPEs **12** are illustrated VPE **12A** includes thread contexts **115a** and **115b,** and VPE **12B** includes thread contexts **115e, 115d** and **115e.**

Multithreaded programs can be running more threads than there are thread contexts on a VPE **12,** by virtualizing them in software such that at any particular point during execution or a program, a specific thread is bound to a particular thread context 115. The number of that thread context **115** provides a unique identifier (TCID) to corresponding thread **14** at that point in time. Context switching and migration can cause a single sequential thread **14,** of execution, to have a series of different thread contexts **115** at different times.

Thread contexts **115** allow each thread or process **14** to have its own instruction butter with pre-fetching so that the core can switch between threads **14** on a clock-by-clock basis to keep the pipeline as full as possible. Thread contexts **115** act as interfaces between VPE **12** and system resources. A thread context **115** may be in one of two allocation states, free or activated. A tree thread context has no valid content and cannot be scheduled to issue instructions. An activated thread context **115** is scheduled according to the implemented policies to fetch and issue instructions from its program counter **17**. Only activated thread contexts **115** may be scheduled. Only free thread contexts may be allocated to support new threads **14**. Allocation and deallocation of thread contexts **115** may be performed explicitly by privileged software, or automatically via FORK and YIELD instructions which can be executed in user mode. Only thread contexts **115** which have been explicitly designated as Dynamically Allocatable (DA) may be allocated or deallocated by FORK and YIELD.

An activated thread context **115** may be running or blocked. A running thread context **115** fetches and issues instructions according to the policy in effect for scheduling threads for processor **105.** Any or all running thread contexts **115** may have instructions in the pipeline of the processor core at a given point of time, but it is not known in software precisely which instructions belong to which running threads **14**. A blocked thread context is a thread context **115** which has issued an instruction which performs an explicit synchronization that has not yet been satisfied. While a running, activated thread context **115** may be stalled momentarily due to functional unit delays, memory load dependencies, or scheduling roles, its instruction stream advances on its own within the limitations of the pipeline implementation. The instruction stream of a blocked thread context **115** cannot advance without a change in system state being effected by another thread **14** or by external hardware, and as such blocked thread context **115** may remain blocked for an unbounded period of time.

A data storage contention issue arises when more than one thread context **115** tries to access the same storage element attached to processor **105**. In order to address this issue, US-A-2005/0251639 discloses an InterThread Communications Unit (ITU) which provides a mechanism for communication between thread contexts **115** using gating storage **110**. US-A-2005/0251639 is included herein by reference for all purposes as if entirely set forth herein.

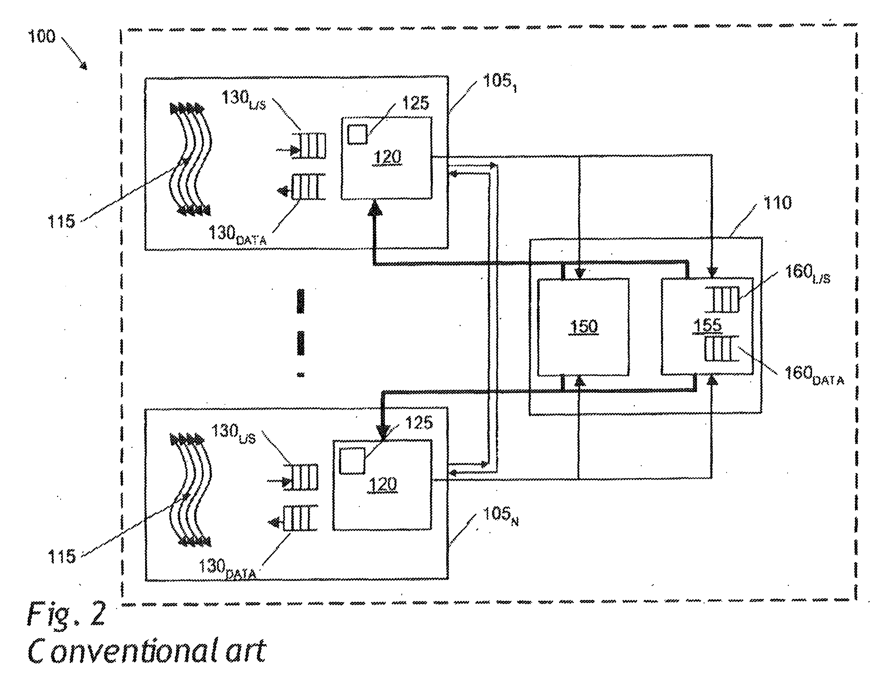

Reference is now made to Figure 1B, a simplified schematic block diagram of a system **100** of the prior art (shown in more detail in Figure 2). Multiple MIPS processors **105** are connected to and share gated storage **110** through a signaling interface **225**. Each MIPS processor **105** includes InterThread Communications Unit (ITU) **120** which together manage communications between MIPS processors **105** and gated storage **110**. As shown in Figure 1B, ITUs **120** are wired to drive and accept strobes from each other using a signaling interlace **180**.

Reference is now made to Figure 2, a more detailed schematic block diagram of system **100** from US-A-2005/0251639, which includes (N) multiple multithreaded processors **105ᵢ** each coupled to a gating storage **110.** Each processer **105ᵢ** is capable of concurrent support of multiple thread contexts **115** that each issue instructions, some of which are access instructions into gating storage **110**. An inter-thread communications unit (ITU) **120** manages these access instructions by storing access instructions in a request-storage **125**, a buffer/memory inside ITU **120**, and ITU **120** communicates with thread contexts **115** and other processor resources using one or more first-in first-out (FIFO) registers **130ₓ**.

To allow for synchronization of various threads **14** that need to intercommunicate, inter-thread communication (ITC) memory **110** is used and is designed in order to allow threads **14** to be blocked on loads or stores until data has been produced or consumed by other threads **14**. For example, if a thread **14** attempts to read a memory element, but the memory element, has not as yet been written, then the read request, remains "shelved" until the corresponding, datum is available.

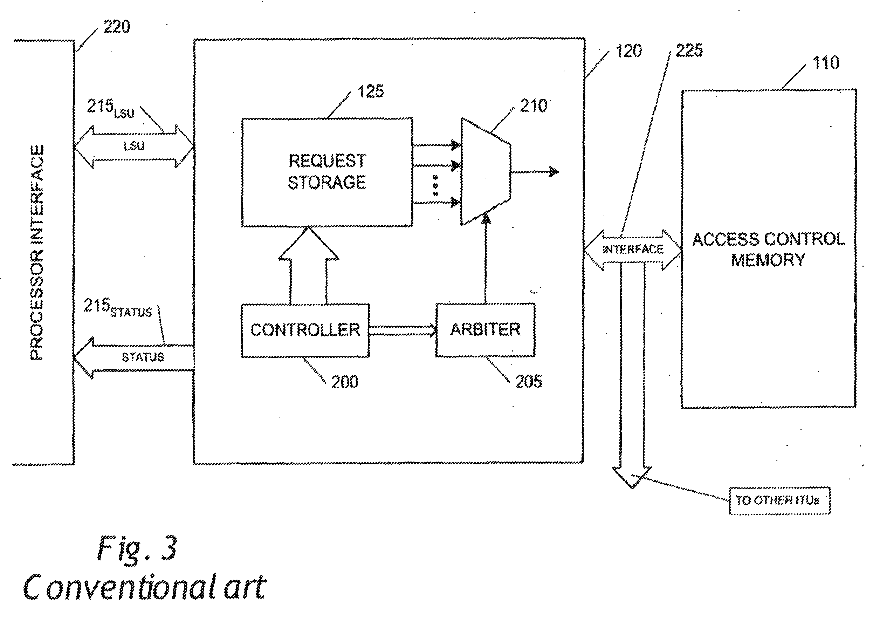

Processor **105ᵢ** includes a load/store FIFO (FIFO **130**_{**L**/S}) for transmitting information to ITU **120** and a data FIFO (FIFO_{DATA}) for receiving information from ITU **120**. ITU **120** communicates with various resources **18** of its processor **105ᵢ** through FIFOs **130ₓ,** such as for example with an arithmetic logic unit. (ALU), a load/store unit (LSU) and task scheduling unit (TSU) when communicating with various (bread contexts **115**. Further structure and a more detailed description of the operation of ITU **120** are provided below in the discussion of Figure 3. The main responsibility of the TSU is to switch threads. While the following description makes use of these LSU/ALU/TSU functional blocks, these blocks and the interdependence of these blocks are but one example of an implementation of processor **105**. In a broad sense, gating storage **110** is a memory, and ITU **120** is a controller for this memory and the manner by which a memory controller communicates to its memory and to a processor be implemented in many different ways.

Gating storage **110**, in a generic implementation, may include one or both of two special memory locations: (a) inter-thread communications (TTC) storage memory **150**, (b) a FIFO gating storage **155**. Access instructions executed by ITO **120** can initiate accesses to Memory **150** from a particular data location using one of the associated access method modifiers for that particular data location.

FIFO gating storage **155** allows threads in multithreaded processor **105** to synchronize with external events. The data of storage memory **150** enables thread-to-thread communication and the data of FIFO gating storage **155** enables thread-to-external event communication. FIFO gating storage **155** includes FIFOs **160** for communications in these data driven synchronization activities,

The fundamental property of thread context storage **110** is that loads and stores can be precisely blocked if the state and value of the cell do not meet the requirements associated with the view referenced by the load or store. The blocked loads and stores resume execution when the actions of other threads of execution, or possibly those of external devices, result in the completion requirements being satisfied. As gating storage references, blocked thread context loads and stores can be precisely aborted and restarted by system software.

ITU **120** accepts commands (read, write, kill request) from various thread contexts **115** and responds according to the status of the target, memory device. A thread context **115** that is waiting for a response can kill its request using the kill command which is sent along with its thread context identifier (TCID).

Reference is now made to Figure 3, a schematic block diagram from US-A-2005/0251639 illustrating more detail of ITU **120** coupled to gating storage **110** as shown in Figure 2. ITU **120** includes request storage **125** and a controller **200** coupled to both request storage **125** and to an arbiter **205**. A multiplexer **210**, coupled to an output of request storage **125**, selects a particular entry in request storage **125** responsive to a selection signal from arbiter **205**. ITU **120** receives and transmits data to thread contexts **115** shown in Figure 2 using multiple data channels **215**, including a status channel **215**_{STATUS} and a LSU data channel **215**_{LSU} through a processor interface **220**. Data channels **215**ₓ use one or more FIFOs **130**ₓ shown in Figure 2. ITU **120** has a command/response protocol over interface **220** with respect to LSU and a status/kill protocol over interface **220** to thread contexts **115** within its particular processor **105** (i.e., every processor **105** has its own unique ITU **120**). Signaling interface **215** incudes general signals (clock, reset), standard memory signals (address, byte enables, data), command signals (read, write, kill) as well as the thread context specific signals (TCID and response TCID).

Additionally, ITU **120** communicates with grating storage **110** (denoted in Figure 3 as "Access Control Memory") and with other ITUs **120** in processors **105** using an external interface **225**. Controller **200** manages internal interfaces to thread contexts **115** using processor interface **220** (through the LSU/status channels for example) and to external (external to each processor **105**ᵢ) interfaces (such as gating storage **110** and other ITUs **120** of other processors **105**ᵢ).

ITU **120** accepts loads/stores (LDs/STs), after any required translation, from an LSU. The LSU detects whether any particular load or store is happening to an ITC page (these pages exist in gating storage **110)** based on a decode in the physical memory space. These LD/ST "requests" are included within the scope of the term "memory access instruction" as used herein. Controller **200** manages the storage and retrieval of each memory access instruction in request storage **125**. Request storage **125** of the preferred embodiment has N_{TC} number of entries, where N_{TC} is the number of hardware threads supported by the associated processor **105.** This number of entries allows ITU **120** to keep "active" one gating storage **110** access from each thread context **115.**

Controller **200** continues to add memory access instructions to request storage **125** as they are received, and continues to apply these memory access instructions to gating storage **110.** At some point, depending on the occupancy of request storage **125** (RS), there may be multiple unsuccessful accesses and/or multiple untried memory access instructions in request storage **125.** At this point, memory access instructions in request shelf **125** are arbitrated and sent out periodically to external interface **225.** Arbitration is accomplished by controller **200** applying an arbitration policy to arbiter 205 which selects a particular one memory access instruction from request shelf **125** using multiplexer **210.**

In the case of a 'success' (i.e., the memory access instruction is executed using the applicable memory access method modifier extracted from gating storage **110** that was related to the memory storage location referenced by the memory access intruction) ITU **120** sends back a response to processor **105**ₚ over processor interface **220.** Data and acknowledge are both sent back for a load type operation while an acknowledge is sent for a store type operation. An acknowledge is sent to processor **105**ₚ (*e.g*. the LSU sends acknowledgment to the TSU) also, which moves that thread context **115**ₚ state from blocked to runnable. The memory access instruction to ITU **120** completes and is deallocated from request storage **125.**

In the case of a 'fail' the memory access instruction is unable to be executed using the applicable memory access method modifier extracted from gating storage **110** that was related to the memory storage location referenced by the memory access instruction), ITU **120** performs any necessary housekeeping on management tag data associated with the stored memory access instruction. Whenever a new access is made to ITU **120,** or an external event occurs on external ITU interface **220,** ITU **120** retries all the outstanding requests in request storage **125,** for example using a FCFS (First Come First Serve) arbitration policy. This preferred policy ensures fairness and is extendable in a multiprocessor situation.

On an exception being taken on a particular thread context **115,** or when thread context **115**ₚ becomes halted, processor **105**ₚ signals an abort for the outstanding ITC access of thread context **115**ₚ**.** This abort, signal causes ITU **120** to resolve a race condition (the "race" between aborting that operation or completing the operation which could have occurred in the few cycles it takes to cancel an operation) and accordingly to cancel or to complete the blocked memory access instruction operation and return a response to interface **220** (e.g., using IT_resp[2:0]). Processor **105** using interface **220** (*e.g*., using the IT_Cmd bus) requests a kill by signaling to ITU **120** (*e.g*., by asserting the kill signal on IT_Cmd along with the thread context ID (*e.g*. IT_cmd_tcid[PTC-1:0])). Processor **105** maintains the abort command asserted until it samples the kill response. **ITU 120** responds to the abort with a three bit response, signaling abort or completion. The response triggers the LSU, which accordingly deallocates the corresponding load miss-queue entry. This causes the instruction fetch unit (IFU) to update the EPC [event driven process? undefined TLA] of the halting thread context **115**ₚ accordingly. In other words, when the abort is successful, program counter **17** of the memory access instruction is used; but when the operation completes then program counter **17** of the next instruction (in program order) is used to update the EPC of thread context **115**ₚ**.** For loads, ITU **120** returns a response and the LSU restarts thread context **115**ₚ corresponding to the thread context ID on the response interface. For stores, ITU **120** returns an acknowledgement and, simular to the load, the LSU restarts the thread context.

According to the disclosure of US-A-200S/0251639. synchronization between thread contexts **115** of different processors **105**ᵢ requires another layer of intercommunications between ITUs **120** of their respective processor **105ᵢ** ITU **120** of each processor **105**ᵢ is coupled to gating storage **110** (i.e., to memory **150** and to FIFO gating storage **155**) as well as to each other ITU **120** of other processors **105**ᵢ of system **100** for bidirectional communication. This intercommunication is needed, among other things, primarily to arbitrate access to the shared resource (i.e., the gated memory). Improvements to synchronization among threads in a multithreaded multiprocessing environment is desirable, particularly when individual threads may be active on more than one multiple processors.

### BRIEF SUMMARY

The present invention seeks to provide improved synchronization between threads in multiple threaded processing.

The preferred embodiment can provide, for example, a system and method for synchronization between thread contexts of a system on a chip including multiple multithreaded processors which eliminates the need for multiple arbiters **205** and intercommunications **180** between multiple ITUs **120.**

According to an aspect of the present invention, there is provided a system as specified in claim 1.

The preferred system includes multiple control interfaces attached externally to respective multiple multithreaded processors. The multithreaded processors each have at least one thread context running an active thread so that multiple thread contexts are running on the multithreaded processors. A memory unit (*e.g*. FIFO and/or RAM) is connected to and shared between the multithreaded processors. The thread contexts request access to the gated memory by communicating multiple access requests over the control interfaces. The access requests originate from one or more of the thread contexts within one or more of the multithreaded processors. A single request storage is shared by the multithreaded processors. A controller stores the access requests in the single request storage. The access requests are typically from two or more of the thread contexts within two or more of the multithreaded processors. The multithreaded processors are optionally of different architectures, (*e.g* MIPS and ARM). The system-level inter-thread communications unit is preferably the only inter-thread communications unit in the gated storage system. The controller and the request storage are preferably operable for storing in the request storage, during a single clock cycle, one of the access requests from any of the multithreaded processors. The controller and the request storage are operable for storing in the request storage, preferably during a single clock cycle, at least two of the access requests from at least two the multithreaded processors. The controller and the request storage are further operable for deallocating one of the access requests, thereby removing the one access request from the request storage, during the single clock cycle while simultaneously accepting other access requests from the multithreaded processors. The controller is preferably operable for handling a kill request from any of the multithreaded processors which removes from the request storage any of the access requests. The kill request is signaled to the controller via the external control interface along with an identifier identifying the thread context to be killed, upon which the controller appends an identifier identifying the requesting processor according to the external control interface from which the request was received (i.e., each interface is dedicated to a specific processor). The controller is preferably adapted for handling the access requests from any of the multithreaded processors by receiving via the control interfaces an identifier identifying the thread context.

According to another aspect of the present invention, there is provided a method of synchronization of data as specified in claim 9.

The preferred embodiment provides a method for synchronization of thread contexts in a gated storage system. The gated storage system includes (a) external control interfaces connected to multithreaded processors and (b) memory connected to and shared between the multithreaded processors. An active thread is run in each of the multithreaded processors so that thread contexts run the active threads on the multithreaded processors. Access to the gated memory is requested by communicating access requests over the control interfaces. The access requests originate from any of the thread contexts within any of the multithreaded processors. A single request storage is shared by the multithreaded processors. All access requests from the multithreaded processors are stored in the single request storage. During a single clock cycle, one of the access requests is stored from any of the multithreaded processors. During a single clock cycle, at least two access requests are preferably stored from at least two of the multithreaded processors. One of the access requests is deallocated, by removing the one access request from the request storage during the single clock cycle. New access requests are stored in the same cycle as deallocation is effected. Access requests are handled from any of the multithreaded processors by receiving via the control interfaces at least one identifier identifying a thread context and a processor. A kill request is handled by removing from the request storage any access requests from any of the multithreaded processors by receiving via the control interfaces at least one identifier identifying at least one of the thread contexts. Multiple new access requests are stored in the same cycle as multiple kill requests effect deallocation (as well as standard deallocation due to servicing a pending request).

in the preferred embodiment, the system includes multiple multi-threaded processors. Each multi-threaded processor is configured to have at least one thread context running at least one active thread. A system-level inter-thread communications unit includes multiple control interfaces. Each control interface connects respectively to one of the multi-threaded processors. A gated memory connects to the system-level inter-thread communications unit and is shared by the multithreaded processors. The thread contexts request access to the gated memory by communicating multiple access requests over the control interfaces. The access requests originate from any of the thread contexts within any of said multithreaded processors. A single request storage operatively connects to the control interfaces and a controller is adapted to store the access requests in the single request storage.

These, additional, and/or other aspects and/or advantages of the present invention are set forth in the detailed description which follows; possibly inferable from the detailed description; and/or learnable by practice of the present invention.

### BRIEF DESCRIPTION OF THE DRAWINGS

Embodiments of the invention are described below, by way of example only, with reference to the accompanying drawings, wherein:
Figure 1 schematically illustrates a conventional multithreaded processor of MIPS architecture;
Figure 1A schematically illustrates relevant details of a thread context (TC) which is part of the conventional multithreaded processor **105** of Figure 1;
Figure 2 is a schematic block diagram of the system of US 2005/0251639, which includes multiple (N) multithreaded processors **105,** each coupled to a gating storage **110**;
Figure 3 is another schematic block diagram from US2005/0251639 illustrating more detail of the ITU **120** coupled to gating storage **110** as shown in Figure 2;
figure 4 is a simplified block diagram of a system level interthread communications unit (system-level ITU) externally connected to two multi-threaded processors which share interthread communications storage (ITC Store) internal to the ITU, according to an embodiment of the present invention;
figure 5 is a flow diagram which graphically illustrates a control method, in the system of Figure 4;
figure 6 is s a simplified block diagram of a system level interthread communications unit (system-level ITU), according to a preferred embodiment of the present invention, with synchronisation between thread contexts of multiple multithread processors handled within a single Request Shelf;
Figure 7 is a simplified block diagram of a general system architecture employing a system-level ITU to handle accesses from various processors to a shared memory resource; and
figure 8 is an illustration of a simplified method according to an embodiment of the present invention.

### DETAILED DESCRIPTION

Reference will now be made in detail to embodiments of the present invention, examples of which are illustrated in the accompanying drawings. The embodiments are described below to explain the teachings herein by referring to the Figures.

It should be understood that although the following discussion relates multithreating MIPS processors, the teachings herein may implemented using other multithreaded processor architectures. Indeed, the inventors contemplate the application of this claimed invention to various other architectures.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

By way of introduction, a principal intention of the described embodiments is to improve the synchronization between thread contexts of a system on a chip including multiple multithread processors. US-A-2005/0251639 discuses InterThread Communications Unit (ITU) **120** which processes access requests from multiple thread contexts **115** within a single processor **105.** While US-A-2005/0251639 does disclose expandability to multiple processors **105,** with mutiple ITUs **120,** the method disclosed performs task scheduling by signaling between all ITUs **120** of system **100.** Specifically in paragraph 0062, US-A-2005/0251639 disposes the use of signaling, *e.g.* a strobe signal to indicate to all ITUs **120** that shared gated memory **110** has been updated. The strobe signal causes each ITU **120** to cycle through the pending requests in its request storage **125** (also known as request shelves **125**). The approach disclosed in US-A-2005/0251639 requires that all the ITUs **120** have to be wired to drive and accept strobes from each other. Furthermore, the approach disclosed in U-A-2005/0251639 requires cycling through all the request shelves **125** upon every strobe signal.

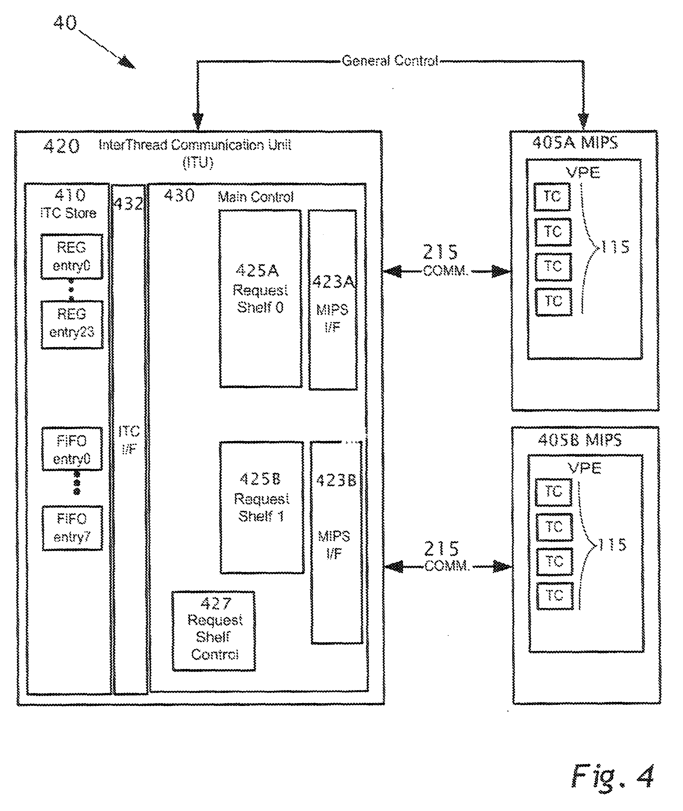

Referring now to the drawings. Figure 4 illustrates a simplified block diagram of a system **40** of a system-level-interthread-communications unit **420** externally connected to two multi-threaded processors **405A** and **405B** which share interthread communications storage **410.** System-level ITU **420** includes three primary elements: main control unit **430,** ITC interface block **432** and ITC storage **410**. Each processor **405** is connected to ITU **420** through a dedicated interface **423A** and **423B**. Signaling between processors 405 and respective interfaces **423**, may preferably be in compliance with the standard as disclosed in US-A-2003/0251639 for standard MIPS processors, *e.g*. MIPS 34K. syslem-level ITU **420** includes request shelf **425A** and **425B** which store requests respectively of thread contexts **115** of both processors **405A** and **405B.**

Request shelves **425A** and **425B** are controlled by a request shelf control block **427** which controls access of thread contexts **115** to request shelves **425A** and **425B**. Handling of the pending requests stored in request shelves **425A** and **425B** is event driven and performed in both request, shelves **425A** and **425B** as data stored in gating storage **410** become available and valid. One method to handle pending requests stored in request **425A** and **425B** is to include logic circuitry in control block **427** to alternate between request shelves **425A** and **425B**, thus always checking the other request shelf **405** for pending requests after processing one of request shelves **425A** and **425B**. Logic circuitry in block **427** may be designed so that pending requests that are not immediately handled are re-assessed following the processing of any requests.

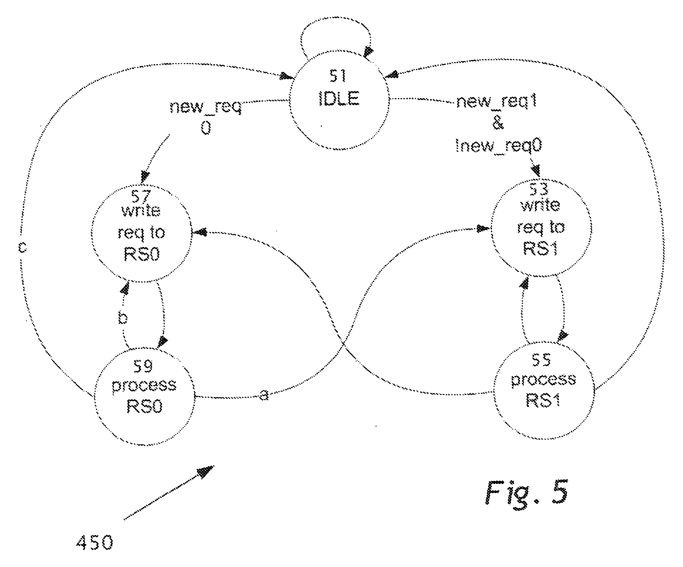

Reference is now made to Figure 5, a flow diagram which graphically illustrates a method **450** used, in system **40**, of cycling through pending requests in alternating fashion between those stored in request shelf **425A** and those scored in request shelf **425B**. An idle state **51** is entered (for instance in line (c)) when there are no pending requests from any thread context **115** of processors **405**. From idle sate **51**, if a request is pending from processor **405A**, the request is written (step **57**) to request shelf **425A** following which request shelf **425A** is processed (step **59**). Typically, if a new request arrives from processor **405B**, the request is then written (step **53**) to request shelf **425B f**ollowing which request shelf **425B** is processed (step **55**). If two requests arrive simultaneously while in the idle state **51** then one of the processors is given precedence, *e.g*. **405A**, such that its request is shelved (step **57**) to shelf **425A** and processed (step **59**), after which the request from **405B** is shelved (step **53**) and processed (step **55**). Similarly, if a request from one processor (*e.g*., **405A** comes while the control logic is already processing a request from the other processor (*e.g*., **405B**), the new request is processed upon completion of the current request processing. If, on the other hand there is not a new request from the other processor, then the requests of current processor are continuously shelved and processed.

However, using system **40**, there could be a scenario in which only thread context **115** in one processor, *e.g*. **405A** is the data "producer" (i.e., always requests *writing* to locations in gated storage **410**) and all other thread contexts **115**, from both processors **405**, In system **40**, are data. "consumers" (e.g., always request *reading* from the locations in gated storage **410**). In such a case, in that control block **427** is configured to process requests in a fashion alternating between processors **405**, the following result likely occurs: read requests are shelved in both request shelves **425**; a write request shelved in request shelf **425A** is processed and then a read request ls processed from request shelf **425B**. Similarly, every time a write is processed in request shelf **425A**, a read request is subsequently processed in request shelf **425B**, thus read requests pending in request shelf **425A** are never processed. This issue may be addressed by tagging each shelf entry by an "arrival" number indicating when the request was shelved. Control block **427** is configured (in addition to checking whether the pending request may be performed) to read the arrival number tagging the pending requests in both request shelves giving precedence to the pending request of lowest arrival number. However, at some point, given a finite number of bits assigned for the arrival number field, the arrival numbers "wrap around" and start again from zero. Hence, all pending requests are preferably renumbered with new arrival numbers when the arrival number counter reaches a maximum.

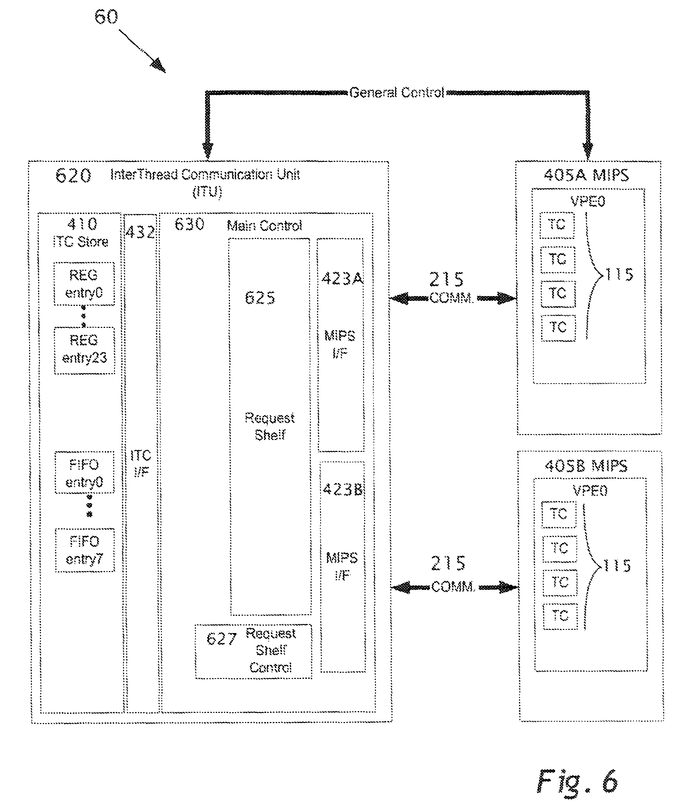

Reference is now made to Figure 6 a simplified block diagram of a system **60** on chip, according to an embodiment of the present invention, with synchronization between thread contexts **115** of multithreaded processors **405A** and **405B.** A system level Interthread Communications Unit (system-level ITU) **620** is externally connected to two multi-threaded processors **405A** and **405B** which share Interthread Communications (ITC) storage **410.** System-level ITU **620** includes three primary elements: main control unit **630,** ITC interface block **432** and ITC storage **410.** Each processor **405** is connected respectively to system-level **ITU 620** through dedicated interfaces **423A** and **423B.** Signaling between processors **405** and respective interfaces **423,** is preferably standard as disclosed in US 20050251639 for standard MIPS processors, *e.g.* MIPS 34K. System-level ITU **620** includes a single request shelf **625** which stores requests of thread contexts **115** of both processors **405A** and **405B.** Since, in this example there are two processors 405 which can perform accesses simultaneously, system-level ITU **620** is preferably configured to shelve two pending requests from both processors **405** during a single clock pulse. Request shelf **625** is controlled by request shelf control block **627** which is responsible for accepting memory access requests from thread contexts **115** and storing them to request shelf **625.** Processing of the pending requests stored in request shelf **625** is performed by cycling through request shelf **625** and executing the requests as dictated by the exigencies of gating storage **410** (e.g., that valid data is available for a read request, that a memory location is available for a write request). Request shelf control block **627** is also responsible for removing processed requests and signaling such completion of execution to the requesting thread context.

A request shelf control block **627** preferably handles cycling through pending requests stored in request shelf **625.** If there are no pending requests from any of process **405** for accessing gating storage **410,** then request shelf **625** is idle. Otherwise, if there is a pending request from one of processors **405,** the request, is shelved in request shelf **625** following which the request shelf is processed. If two requests arrive simultaneously, they are both shelved in the same clock cycle, the access from one processor is given precedence within the shelf, *e.g.*, **405A,** such that its request, higher up in the shelf is processed first. Access requests by the various system thread contexts to gated storage **410** are performed under control by request shelf control block **627.** All requests are answered in turn by driving communication lines **215** with response data and relevant access information to the requesting processor **405;** each processor **405** distinguishes between its thread contexts **115** using identifier lines **215** driven by ITU **620.**

ITU storage **410** provides gating storage for inter-communication between all system thread contexts **115** including thread contexts **115** of different processors **405.** As an example, ITC storage **410** has the following storage cells: 24 standard (non-FIFO) register cells, 8 FIFO registers of 64 bytes (16 entries of 32bits). The number of entries, (*e.g.* 32 for the present example) are indicated on the IT_num_entries[10.0] lines which are driven to both of multithreaded processors **405.**

A multithreaded processor **405,** *e.g.* MIPS 34K, drives (blk_grain) lines which define granularity or spacing between storage cell entries in ITC storage **410,** for mapping cells out different pages of memory **410.** Since system on chip (SoC) **60** employs multiple processors **405,** *e.g.* two MIPS34K processor, these lines which define granularity may be handled appropriately so that all processors **405** use the same granularity. To allow for programmability, system-level ITU **620** may use grain lines (blk_grain) from one designated multithreaded processor **405A** and software may insure that other processors, *e.g* MIPS 34K **405B** uses the chosen granularity.

One of processors **405** accesses system-level ITU **620** by placing a command on lines **215,** along with other relevant access information (*e.g.* id, addr, data). This data, along with the command, is referred to herein as "request data". Strobes and/or enables are not required, instead, system-level ITU **620** accepts as a valid access every clock cycle during which there is active cmd data (i.e., read, write, kill) driven. A given thread context **115** does not drive another command (except for kill) until it has received a response from ITU **620** (on a dedicated signal line on COMM. I/F **215**). On the next clock, however, another thread context **115** can drive "request data". Request shelf **625** maintains one entry per thread context **115.** It should be noted that though the kill command is an independent "request data" command that could come from thread context **115,** there is no need to buffer the kill command in a unique shelf, but rather request shelf control block **627** modifies the currently buffered "request data" to be killed, thereby indicating to the request shelf logic **627** that the request is to be killed. Thus when the request shelf logic **627** is ready to process that shelf entry it notes that the "request data" is killed and thus deallocates the entry.

Deallocation of an entry is an operation performed when a command is killed and thus discarded from request shelf **625.** Deallocation more commonly occurs when a shelf entry has been processed successfully. That is, in general, request shelf **625** fills up with access requests from various thread contexts **115** after which request shelf logic **627** looks at each request to decide if it can be processed or if it must remain in request shelf **625** till the storage location it is requesting to access is available. Once request shelf logic **627** determines that the request can be processed, request shelf logic **627** deallocates the request from the shelf, having granted the access so requested by thread context **115** in question.

As system on chip (SoC) **60** has two processors **405** which can simultaneously (i.e., in the same clock cycle) drive valid "request data", system-level ITU **620** can write to two registers within the single request self data structure **625** including *e.g.* 8 shelves (or registers) for each of eight thread contexts **115.** In the event that two requests arrive simultaneously, the request from one processor, *e.g.* **405A** is written to the highest available entry followed by the request from the other processor, *e.g* **405B** in the next highest entry. Priority is determined by convention.

Innovative handling is provided to support multi-processor configuration **60,** including for example:
a) in a configuration, *e.g.* system **100,** with multiple processors **105,** each with a dedicated ITU **120,** a request from single multithreaded processor **105** is handled per single clock cycle. In configuration **60** respective requests from multiple multithreaded processors **405** are stored in request shelf **625** during a single clock cycle;
b) in a configuration, *e.g*. system **100**, with multiple processors **105ᵢ** each with a dedicated ITU **120**, respective request shelf controllers **200** are configured to deallocate an entry in request shelf **125** while request shelf **125** is simultaneously (during a single clock cycle) being written into by a request from single processor **105ᵢ**. In configuration **60**) request shelf controller **627** and request shelf **625** are configured to handle a deallocate operation while simultaneously during a single clock cycle) storing N requests from each of N multithreaded processors, *e.g*. two requests from two multithreaded processors **405A** and **405B;**
c) in a configuration, *e.g*. system **100**, with multiple processors **105ᵢ** each with a dedicated ITU **120**, respective request shelf controllers **200** are configured to process a single kill command and associated thread context identifier (tcid) of one of the thread contexts **115** of a single professor **105ᵢ**. In configuration **60**, kill commands and associated thread context identifiers (tcid) are processed by controller **627** simultaneously (during a single clock cycle) from each of multiple processors **405**; and
d) in a configuration, *e.g*. system **100**, with multiple processors **105ᵢ** each with a dedicated ITU **120** a given shelf entry or register includes data defining the access request from one of thread contexts **115**. In configuration **60**, additional bits are appended to each shelf entry indicating from which processor **405** the request originates. When the stored command is later the correct bus **215** is driven which corresponds to multithreaded processor **405** which originated the access request.

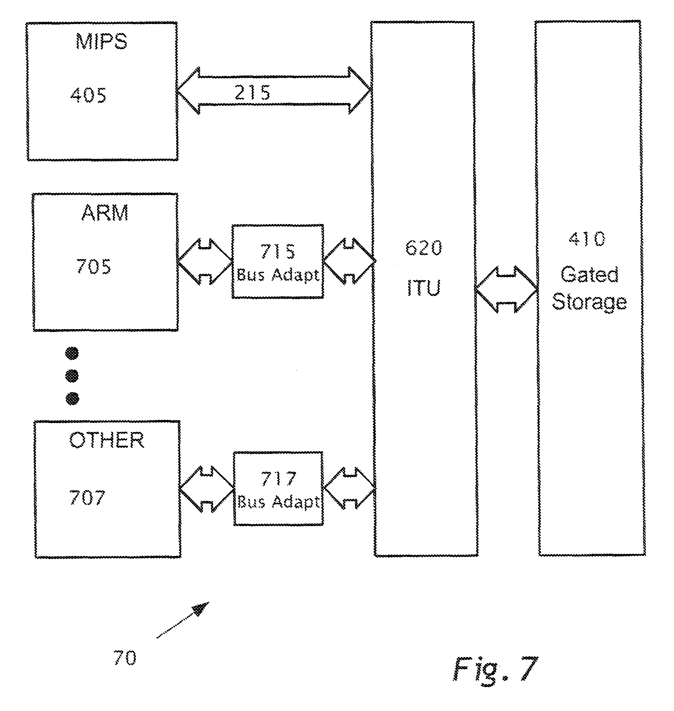

Reference is now made to Figure 7, a simplified block diagram of a system **70** which illustrates another feature of the preferred method and system. System **70** includes processors MIPS **105**, ARM (Advanced RISC microprocessor) **705** and another **707** of arbitrary architecture all sharing gated storage **410**. System level ITU **620** controls access to gated storage **410**. Signaling interface **215** is used between MIPS **105** and ITU **620**. Bus adapters **715**, **717** may be used to adapt the signaling of signaling interface **215** to the corresponding signals of respective processors **705** and **707**. Processors **705**, **707** are optionally single or multi-threaded processors, and/or single or multiple core processors.

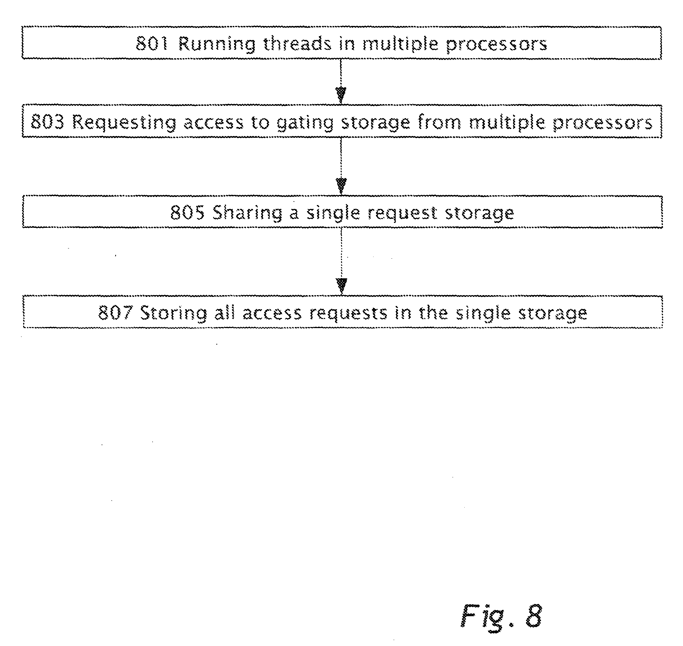

Reference is now also made to Figure 8, illustrating a method according to an embodiment of the present invention. Multiple threads are running (step **801**) in multiple multithreaded processors **105**, **705**, **and 707**. The multiple processors request (step **803**) access to gated storage **410**. Requests which cannot be processed are stored in a single request storage shared (step **805**) by multiple multithreaded processors **105**, **705**, **and 707**. Waiting access requests from multiple multithreaded processors **105** are stored (step **807**) in the single gated storage **410**.

Although selected embodiments of the present have been shown and described, it is to be understood that the present, invention is not limited to the described embodiments. Instead, it is to be appreciated that changes may be made to these claims which follow.

The disclosures in United States patent application no. 12/272,290, from which this application claims priority, and in the abstract accompanying this applications are incorporated herein by reference.

## Claims

1. A system including:
a plurality of multi-threaded processors, each multi-threaded processor configured to have at least one thread context running at least one active thread;
a system-level inter-thread communications unit that includes a plurality of control interfaces, each control interface operatively connecting to a respective one of the plurality of multi-threaded processors,
a gated memory operatively connecting to the system-level inter-thread communications unit, and shared by the multithreaded processors, wherein the thread contexts request access to said gated memory by communicating a plurality of access requests over said control interfaces, said access requests originating from any of said thread contexts within any of said multithreaded processors;
a single request storage operatively connected to the control interfaces; and
a controller operable to store said access requests in said single request storage.

2. The system, according to claim 1, wherein said access requests are from at least two of said thread contexts and from at least two of said multithreaded processors.

3. The system, according to claim 1 or 2, wherein said multithreaded processors are of at least two different architectures.

4. The system, according to claim 2 or 3, wherein said system-level inter-thread communications unit is a single inter-thread communications unit in the gated storage system.

5. The system, according to any preceding claim, wherein said controller and said request storage are operable to store, in said request storage, during a single clock cycle: a) one of said access requests from any of said multithreaded processors; or b) at least two of said access requests from least two said multithreaded processors.

6. The system according to any one of claim 1 to 4, wherein said controller and said request storage are operable to store, in said request storage, during a single clock cycle, at least two of said access requests from at least two of said multithreaded processors and wherein, during said single clock cycle, said controller and said request storage are further adapted to deallocate one of said access requests, thereby removing said one access request from said request storage, while simultaneously accepting others of said access requests from said multithreaded processors.

7. The system, according to any preceding claim, wherein said controller is operable to handle a kill request and thereby to remove from said request storage any of said access requests from any of said multithreaded processors by receiving, via said plurality of control interfaces, at least one identifier identifying at least one of said thread contexts.

8. The system, according to any preceding claim, wherein said controller is operable to handle said access requests from any of said multithreaded processors by receiving via said control interfaces at least one identifier identifying at least one of said thread contexts.

9. The system according to claim 1, wherein at least two of the processors have different architectures.

10. A method of synchronization of data in a gated-storage system including a plurality of control interfaces operatively attached externally to a respective one of a plurality of multithreaded processors and a gated memory operatively connected to a system-level inter-thread communications unit and shared between the multithreaded processors, the method including the steps of:
running at least one active thread in each of the multithreaded processors by a plurality of thread contexts on the multithreaded processors;
requesting access to the gated memory by communicating a plurality of access requests over said control interfaces, said access requests originating from any said thread contexts within any of the multithreaded processors;
sharing a single request storage by the multithreaded processors; and
storing all access requests from the multithreaded processors in said single request storage.

11. The method according to claim 10, including the step of storing, in said request storage, during a single clock cycle, one of said access requests from any of the multithreaded processors.

12. The method according to claim 10, including the step of storing, in said request storage, during a single clock cycle, at least two access requests from at least two of the multithreaded processors.

13. The method according to claim 12, including the step of deallocating one of said access requests, thereby removing said one access request from said request storage during said single clock cycle.

14. The method according to any one of claims 10 to 13, including the step of handling access requests from any of the multithreaded processors by receiving, via said control interfaces, at least one identifier identifying any of said thread contexts.

15. The method according to any of claims 10 to 14, including the step of handling a kill request and thereby removing from said request storage any access requests from any of the multithreaded processors by receiving via said control interfaces at least one identifier identifying at least one of said thread contexts.

## Patentansprüche

1. System umfassend:
eine Vielzahl von Multi-Thread-Prozessoren, wobei jeder Thread-Prozessor so konfiguriert ist, dass er wenigstens einen Thread-Kontext hat, der wenigstens einen aktiven Thread ausführt;
einer Kommunikationseinheit zur Kommunikation zwischen Threads auf Systemebene, welche Kommunikationseinheit eine Vielzahl von Steuerschnittstellen umfasst, wobei jede Steuerschnittstelle operativ mit einem der Vielzahl von Multi-Thread-Prozessoren verbunden ist,
einem Gate gesteuerten Speicher, der operativ mit der Kommunikationseinheit zur Kommunikation zwischen den Threads auf Systemebene verbunden ist und von den Multi-Thread-Prozessoren gemeinsam genutzt wird, wobei diese Thread-Kontexte Zugang zum Gate gesteuerten Speicher anfragen, indem sie eine Vielzahl von Zugangsanfragen über die Steuerschnittstellen kommunizieren, wobei die Zugangsanfragen von irgendeinem der Thread-Kontexte innerhalb irgendeines der Multi-Thread-Prozessoren stammen;
einem einzelnen Anfragespeicher, der operativ mit den Steuerschnittstellen verbunden ist; und
einem Controller, der zum Speichern der Zugangsanforderungen in dem einzelnen Anfragenspeicher betreibbar ist.

2. System nach Anspruch 1, wobei die Zugangsanforderungen von wenigstens zwei der Thread-Kontexte und wenigstens zwei der Multi-Thread-Prozessoren sind.

3. System nach Anspruch 1 oder 2, wobei die Multi-Thread-Prozessoren wenigstens zwei verschiedene Architekturen haben.

4. System nach Anspruch 2 oder 3, wobei die Kommunikationseinheit zur Kommunikation zwischen Threads auf Systemebene eine einzige Kommunikationseinheit zur Kommunikation zwischen Threads in dem Gate gesteuerten System ist.

5. System nach einem vorhergehenden Anspruch, wobei der Controller und der Anfragespeicher betreibbar sind, um in dem Anfragespeicher während einer einzelnen Taktperiode zu speichern: a) eine der Zugangsanforderungen von irgendeinem der Multi-Thread-Prozessoren; oder b) wenigstens zwei der Zugangsanfragen von wenigstens zwei der Multi-Thread Prozessoren.

6. System nach irgendeinem der Ansprüche 1 bis 4, wobei der Controller und der Anfragespeicher betreibbar sind, um in dem Anfragespeicher während einer einzelnen Taktperiode wenigstens zwei der Zugangsanfragen von wenigstens zwei der Multi-Thread-Prozessoren zu speichern, und wobei während der einzelnen Taktperiode der Controller und der Anfragespeicher ferner dafür geeignet sind, eine der Zugangsanfragen freizugeben, wobei **dadurch** die eine Zugangsanfrage von dem Anfragespeicher entfernt wird, wobei gleichzeitig andere der Zugangsanfragen von den Multi-Thread-Prozessoren akzeptiert werden.

7. System nach einem vorhergehenden Anspruch, wobei der Controller betreibbar ist, um eine Kill-Anfrage zu behandeln, und **dadurch** von dem Anfragespeicher irgendwelche der Zugangsanfragen der Multi-Thread-Prozessoren zu entfernen, in dem er über die Vielzahl der Steuerschnittstellen wenigstens einen Identifizierer erhält, der wenigstens einen der Thread-Kontexte identifiziert.

8. System nach einem vorhergehenden Anspruch, wobei der Controller betreibbar ist, um die Zugangsanfragen von irgendeinem der Multi-Thread-Prozessoren zu behandeln, in dem er über die Steuerschnittstellen wenigstens ein Identifizierer erhält, der wenigstens einen der Thread-Kontexte identifiziert.

9. System nach Anspruch 1, wobei wenigstens zwei der Prozessoren verschiedene Architekturen haben.

10. Verfahren zur Synchronisation von Daten in einem Gate gesteuerten Speichersystem mit einer Vielzahl von Steuerschnittstellen, die operativ an einem entsprechenden Prozessor aus einer Vielzahl von Multi-Thread-Prozessoren extern angeschlossen sind, und einem Gate gesteuerten Speicher, der operativ mit einer Kommunikationseinheit zur Kommunikation zwischen Threads auf Systemebene verbunden ist und zwischen den Multi-Thread Prozessoren gemeinsam genutzt wird, wobei das Verfahren die Schritte umfasst:
Ausführen wenigstens eines aktiven Threads in jedem der Multi-Thread-Prozessoren durch eine Vielzahl von Thread-Kontexten an den Multi-Thread-Prozessoren;
Anfordern eines Zugangs zum Gate gesteuerten Speicher durch Kommunizieren einer Vielzahl von Zugangsanfragen über die Steuerschnittstellen, wobei die Zugangsanfragen von irgendeinem der Thread-Kontexte innerhalb irgendwelchen der Multi-Thread-Prozessoren stammen;
gemeinsames Nutzen eines einzigen Anfragespeichers durch die Multi-Thread-Prozessoren; und
Speichern aller Zugangsanfragen von den Multi-Thread-Prozessoren in dem einzelnen Anfragespeicher.

11. Verfahren nach Anspruch 10, wobei das Verfahren den Schritt umfasst eines Speicherns einer der Zugangsanfragen von irgendeinem der Multi-Thread-Prozessoren in dem Anfragespeicher während einer einzigen Taktperiode.

12. Verfahren nach Anspruch 10, wobei das Verfahren den Schritt umfasst eines Speicherns von wenigstens zwei Zugangsanfragen von wenigstens zwei der Multi-Thread-Prozessoren im Anfragespeicher während einer einzigen Taktperiode.

13. Verfahren nach Anspruch 12, wobei das Verfahren den Schritt eines Freigebens einer der Zugangsanfragen umfasst, wobei **dadurch** die eine Zugangsanfrage vom Anfragespeicher während der einzigen Taktperiode entfernt wird.

14. Verfahren nach irgendeinem der Ansprüche 10 bis 13, wobei das Verfahren den Schritt eines Behandelns von Zugangsanfragen von irgendeinem der Multi-Thread-Prozessoren umfasst, indem über die Steuerschnittstelle wenigstens ein Identifizierer erhalten wird, der irgendeinen der Thread-Kontexte identifiziert.

15. Verfahren nach einem der Ansprüche 10 bis 14, wobei das Verfahren den Schritt des Behandelns einer Kill Anfrage umfasst und **dadurch** irgendwelche Zugangsanfragen von irgendeinem der Multi-Thread-Prozessoren vom Anfragespeicher entfernt, indem über die Steuerschnittstellen wenigstens ein Identifizierer erhalten wird, der wenigstens einen der Thread-Kontexte identifiziert.

## Revendications

1. Un système incluant :
une pluralité de processeurs multitâches, chaque processeur multitâche configuré pour avoir au moins un contexte de tâche exécutant au moins une tâche active ;
une unité de communication inter-tâches de niveau système qui inclut une pluralité d'interfaces de contrôle, chaque interface de contrôle étant reliée fonctionnellement et respectivement à l'un des processeurs de la pluralité de processeurs multitâches,
une mémoire à accès par circuit logique reliée fonctionnellement à l'unité de communication inter-tâches de niveau système, et partagée par les processeurs multitâches, dans laquelle les contextes de tâche demandent l'accès à ladite mémoire à accès par circuit logique en communicant une pluralité de requêtes d'accès par l'intermédiaire des interfaces de contrôle, les requêtes d'accès provenant de l'un quelconque des contextes de tâche dans l'un quelconque des processeurs multitâches ;
un stockage à simple requête relié fonctionnellement aux interfaces de contrôle ; et
un contrôleur capable de stocker les requêtes d'accès dans le stockage à simple requête.

2. Le système, selon la revendication 1, dans lequel les requêtes d'accès sont issues d'au moins deux des contextes de tâche et d'au moins deux des processeurs multitâches.

3. Le système, selon la revendication 1 ou 2, dans lequel les processeurs multitâches sont d'au moins deux architectures différentes.

4. Le système, selon la revendication 2 ou 3, dans lequel l'unité de communication inter-tâches de niveau système est une simple unité communication inter-tâches dans le système de stockage à accès par circuit logique.

5. Le système, selon l'une des revendications précédentes, dans lequel le contrôleur et le stockage à requête sont capables de stocker, dans le stockage à requête, pendant un simple cycle d'horloge : a) une des requêtes d'accès issue de l'un quelconque des processeurs multitâches ; ou b) au moins deux des requêtes d'accès issues d'au moins deux processeurs multitâches.

6. Le système selon l'une des revendications 1 à 4, dans lequel le contrôleur et le stockage à requête sont capables de stocker, dans le stockage à requête, pendant un simple cycle d'horloge, au moins deux des requêtes d'accès issues d'au moins deux des processeurs multitâches et dans lequel, pendant le simple cycle d'horloge, le contrôleur et le stockage à requête sont en outre adaptés pour désaffecter l'une de ces requêtes d'accès, de façon à effacer ladite requête d'accès du stockage à requête, et à accepter simultanément pendant ce temps d'autres de ces requêtes d'accès issues de ces processeurs multitâches.

7. Le système, selon l'une des revendications précédentes, dans lequel le contrôleur est capable d'effectuer une requête de suppression et ainsi d'effacer du stockage à requête l'une quelconque des requêtes d'accès de l'un quelconque des processeurs multitâches en recevant, par l'intermédiaire de la pluralité d'interfaces de contrôle, au moins un identifiant permettant d'identifier au moins un des contextes de tâche.

8. Le système, selon l'une des revendications précédentes, dans lequel le contrôleur est capable de manipuler les requêtes d'accès de l'un quelconque des processeurs multitâches en recevant par l'intermédiaire des interfaces de contrôle au moins un identifiant permettant d'identifier au moins un des contextes de tâche.

9. Le système selon la revendication 1, dans lequel au moins deux des processeurs ont des architectures différentes.

10. Une méthode de synchronisation des données dans un système de stockage à accès par circuit logique incluant une pluralité d'interfaces de contrôle fonctionnellement liées de manière externe et respectivement à l'un des processeurs d'une pluralité de processeurs multitâches et une mémoire à accès par circuit logique fonctionnellement reliée à une unité de communication inter-tâches de niveau système et partagée entre les processeurs multitâches, la méthode incluant les étapes :
d'exécution d'au moins une tâche active dans chacun des processeurs multitâches grâce à une pluralité de contextes de tâche dans les processeurs multitâches ;
de demande d'accès à la mémoire à accès par circuit logique par la communication d'une pluralité de requêtes d'accès par l'intermédiaire des interfaces de contrôle, les requêtes d'accès provenant de l'un quelconque des contextes de tâche dans l'un quelconque des processeurs multitâches ;
de partage d'un stockage à simple requête avec les processeurs multitâches ; et
de stockage de toutes les requêtes d'accès issues des processeurs multitâches dans le stockage à simple requête.
un contrôleur capable de stocker les requêtes d'accès dans le stockage à simple requête.

11. La méthode selon la revendication 10, incluant l'étape de stockage, dans le stockage à requête, pendant un simple cycle d'horloge, de l'une des requêtes d'accès issues de l'un quelconque des processeurs multitâches.

12. La méthode selon la revendication 10, incluant l'étape de stockage, dans le stockage à requête, pendant un simple cycle d'horloge, d'au moins deux des requêtes d'accès issues d'au moins deux des processeurs multitâches.

13. La méthode selon la revendication 12, incluant l'étape consistant à désaffecter l'une des requêtes d'accès, de façon à effacer cette requête d'accès du stockage à requête pendant ce simple cycle d'horloge.

14. La méthode selon l'une des revendications 10 à 13, incluant l'étape consistant à manipuler les requêtes d'accès de l'un quelconque des processeurs multitâches en recevant, par l'intermédiaire des interfaces de contrôle, au moins un identifiant permettant d'identifier l'un quelconque des contextes de tâche.

15. La méthode selon l'une des revendications 10 à 14, incluant l'étape consistant à effectuer une requête de suppression et ainsi effacer du stockage à requête une quelconque requête d'accès de l'un quelconque des processeurs multitâches en recevant par l'intermédiaire des interfaces de contrôle au moins un identifiant permettant d'identifier au moins un des contextes de tâche.
